# EUROPÄISCHE PATENTSCHRIFT

(11) **EP 1 620 363 B1**
(45) Veröffentlichungstag und Bekanntmachung des Hinweises auf die Patenterteilung: **07.10.2009**
(21) Anmeldenummer: 04731621.1
(22) Anmeldetag: 07.05.2004
(51) Int. Cl.: C02F 1/44, C02F 1/469, B01D 61/02

(54) **VERFAHREN ZUR AUFBEREITUNG VON NITRATHALTIGEN ABWÄSSERN**
METHOD FOR TREATING WASTE NITRATE-CONTAINING WATER
PROCEDE DE TRAITEMENT DES EAUX USEES CONTENANT DU NITRATE

(30) Priorität: 07.05.2003 DE 10320368
(43) Veröffentlichungstag der Anmeldung: 01.02.2006
(73) Patentinhaber: SÜD-CHEMIE AG, 80333 München (DE); Kcs Osmota GmbH, 71277 Rutesheim (DE)
(72) Erfinder: STREIFINGER, Leopold, 83052 Bruckmühl (DE); SCHMIDT, Friedrich, 83024 Rosenheim (DE); MÜLLER, Jürgen, 71638 Ludwigsburg (DE); HOLZHAUER, Jürgen, 75249 Kieselbronn (DE); RAPP, Hans-Jürgen, 71277 Rutesheim (DE)
(74) Vertreter: Dannenberger, Oliver Andre
(86) Internationale Anmeldenummer: PCT/EP2004/004907
(87) Internationale Veröffentlichungsnummer: WO 2004/099087

(56) Entgegenhaltungen:
- EP-A- 0 051 104
- US-A- 4 983 302
- US-B1- 6 461 514
- HELLEKES R ET AL: "NITRATELIMINATION DURCH UMKEHROSMOSE UND/ODER ELEKTRODIALYSE VERFAHRENSENTWICKLUNG UND VERFAHRENSOPTIMIERUNG" GWF WASSER ABWASSER, OLDENBOURG VERLAG. MUNCHEN, DE, Bd. 130, Nr. 12, 1. Dezember 1989 (1989-12-01), Seiten 638-644, XP000165165 ISSN: 0016-3651

## Beschreibung

Die Erfindung betrifft ein Verfahren zur Aufbereitung von nitrathaltigen Abwässern.

In einer Reihe von Industriezweigen (z.B. in der Katalysatorindustrie, pyrotechnischen und Sprengstoffindustrie, Metallverarbeitung) werden im Laufe des Herstellungsprozesses Metallnitrate oder Salpetersäure eingesetzt. Dabei gelangen Nitrate in größeren Mengen als Abfallprodukte in das betriebliche Abwasser und - falls sie nicht entfernt werden - in den Vorfluter.

Nitrate tragen in den Flüssen und Seen zu Eutrophierung der Gewässer bei. Deshalb ist in der EU und in einigen weiteren Staaten der Erde der Eintrag von Nitrat in Flüsse und Seen begrenzt, sowohl in der Konzentration als auch in der Fracht (Menge).

Man hat bereits auf verschiedenen Wegen versucht, Nitrate aus Abwässern zu entfernen, wobei das Nitration zu unschädlichem Stickstoff reduziert wurde. Der Nitratabbau ist chemisch eine Redoxreaktion, entsprechend der Reaktionsgleichung

NO₃⁻ + 3 H₂O + 5e → ½ N₂ + 6 OH⁻ .

Dabei wird der Stickstoff des Nitrats zu gasförmigem Stickstoff reduziert. Er nimmt dabei 5 Elektronen auf, die von einem Reduktionsmittel geliefert werden müssen, d.h. je nachdem wie viele Elektronen ein Reduktionsmittel liefert, kann vom Reduktionsmittel bis zum fünffachen der molaren Menge des Stickstoffs notwendig sein. Wie aus der obigen Gleichung ersichtlich, steigt der pH-Wert während der Reaktion an, muss also - z.B. um die Umgebungsbedingungen der Bakterien konstant zu halten - durch Zugabe von Säure im Neutralen gehalten werden.

Es ist damit offensichtlich, dass jeder chemische oder elektrochemische Abbau des Nitrats erhebliche Mengen eines Reduktionsmittels notwendig macht und diesen Prozess kostenintensiv gestaltet. Als Ausnahme gilt, wenn das Reduktionsmittel bereits gewissermaßen als Abfallprodukt im Abwasser enthalten ist.

Ein Sonderfall, Nitrate aus Abwässern zu entfernen, ist die in der Praxis am häufigsten angewandte biologische Denitrifikation. Dieses Verfahren beruht auf dem Abbau (Reduktion) von Nitrat durch geeignete Bakterien. Als Reduktionsmittel (= Nährstoff für die Bakterien) dienen praktisch ausschließlich organische Verbindungen, die häufig als Abfallstoffe bereits im Abwasser enthalten sind. Falls Denitrifikationsstufen eingebaut sind, arbeiten alle kommunalen Kläranlagen nach diesem Verfahren, da immer organische Materialien als Nährstoffe für die denitrifizierenden Bakterien geeignet sind.

Im Falle industrieller Kläranlagen mit hoher Nitratfracht reicht oft die organische Zusatzkomponente im Abwasser nicht aus, um alles Nitrat zu reduzieren. Deshalb muss in diesen Fällen die zusätzlich benötigte Menge an organischen Verbindungen künstlich zugeführt werden. Die billigste und am einfachsten zu dosierende Kohlenstoffquelle ist Methanol.

Ferner ist die katalytische Reaktion des Nitrats im Abwasser durch Wasserstoff bekannt. Bei diesem Verfahren erfolgt die Reduktion des Nitrats in kaskadenförmigen Druckreaktoren an Pd/Cu-Katalysatoren. Als Reduktionsmittel dient Wasserstoff. Mit 1 m³ Katalysator (4 Gew.-% Pd) erzielt man eine Abbauleistung von 70 kg Nitrat pro Tag. Die Kosten eines derartigen Katalysators sind aber sehr hoch. Auch bei dieser Reaktion steigt während der Umsetzung der pH-Wert und muss mit Säure neutralisiert werden.

Ferner kann Nitrat statt mit Wasserstoff auch in Elektrolysezellen reduziert werden. Dabei entstehen Stickoxide (NOₓ). Diese Gase sind toxisch und müssen zu Salpetersäure weiter verarbeitet oder mit Ammoniak katalytisch zu Stickstoff reduziert werden.

Von der Firma Vattenfall Europe AG, wurde ein elektrochemisches Reduktionsverfahren zur Nitratentfernung aus belasteten Grundwässern auf den Markt gebracht. Die hierbei angewandte Technik basiert auf zwei Schritten: Der erste Schritt umfasst die Rohwasseraufbereitung mit einem Ionenaustauscher. Im Filtermaterial des Ionenaustauschers wird das Nitrat absorbiert und später im Filterspülwasser angereichert. Der zweite Schritt umfasst die Spülwasseraufbereitung mit einer Elektrolysezelle, wobei das im Wasser gelöste Nitrat reduziert wird und als elementarer Stickstoff ausgast.

Allen diesen Verfahren ist gemeinsam, dass die im Abwasser enthaltenen Nitrate nicht wiedergewonnen werden, so dass die hohen Verfahrenskosten nicht gesenkt werden können.

Aus Ullmanns Enzyklopädie der Technischen Chemie, Band 6, Seite 448/449 (1981) ist bekannt, dass Abwässer durch Umkehrosmose gereinigt werden können. Bei diesem Verfahren werden mit Hilfe einer semipermeablen Membran und unter Anwendung eines Druckes, der größer als der osmotische Gegendruck ist, Ionen, Moleküle, Kolloide oder emulgierte Teilchen zurückgehalten. Das Wasser tritt durch die Membran, und die aufgegebene Lösung wird aufkonzentriert. Bei der Umkehrosmose werden Elektrolyte und/oder niedermolekulare organische Verbindungen mit Teilchengrößen zwischen 5 · 10⁻⁷ und 10⁻⁶ mm bei Drücken bis zu etwa 200 bar von der Membran zurückgehalten.

Der Konzentrationsbereich, in dem die Umkehrosmose sinnvoll sein kann, liegt für Elektrolytlösungen etwa bis 35 g Nitratstickstoff/Liter. Im Bereich höherer Konzentrationen begrenzt derzeit noch der maximale Arbeitsdruck des Moduls die Anwendbarkeit der Umkehrosmose.

Die Anlage besteht im wesentlichen aus einer Pumpe, die das Abwasser auf den erforderlichen Druck bringt; aus einem Feinfilter, Filter zur Entfernung von Teilchen, die sich auf der Membran ablagern könnten; aus meist mehreren geschlossenen Baueinheiten mit den semipermeablen Membranen (Modulen) und aus einem Regelventil, dass den Abfluss des Konzentrates und die Aufrechterhaltung des Arbeitsdruckes regelt.

Als semipermeable Membranen wurden extrem dünne Folien mit 0,2 bis 0,5 µm Dicke entwickelt, die von einem porösen Trägermaterial von etwa 100 µm Dicke gestützt werden. Die semipermeablen Membranen werden meist aus Celluloseacetat oder Polyamid hergestellt. Es werden viele Module zu einer technischen Anlage zusammengebaut.

Über die Aufbereitung bzw. Wiedergewinnung der in diesen Abwässern enthaltenen Nitrate finden sich in dieser Literaturstelle keine Angaben.

Aus der JP 2002/018486 A ist ein Verfahren zur Entfernung von Nitraten aus Wasser durch Umkehrosmose bekannt. Das im Konzentrat angereicherte Nitrat wird durch Zusatz von denitrifizierenden Bakterien und organischen Substanzen, wie Methanol, in molekularen Stickstoff umgewandelt, d.h. nicht wiedergewonnen.

Aus der DE 199 01 571 A1 ist ein Verfahren zur Trennung von Ammoniumnitrat enthaltendem Kondensat-Abwasser durch Umkehrosmose bekannt, wobei in mehreren Stufen ein Konzentrat und ein Permeat erhalten wird. Das Permeat kann als Prozesswasser wieder verwendet werden, während das mit Ammoniumnitrat angereicherte Konzentrat in einen Verdampfer, d.h. in den Ausgangsprozess zurückgeleitet wird. Das Zurückleiten des Ammoniumnitrats in den Ausgangsprozess ist nicht möglich, z.B. wenn die Nitrate im Abwasser nicht den Nitraten im Prozess entsprechen. Das Verfahren befasst sich nicht mit der Aufbereitung von Abwässern, die Alkali- und/oder Erdalkalinitrate zusammen mit Störsubstanzen enthalten.

Aus der JP 54117150 A ist ein Verfahren zum Entsalzen von nitrathaltigem Abwasser durch Umkehrosmose oder Elektrodialyse bekannt. Das entsalzte Wasser mit einer niedrigen Nitratkonzentration wird wiederverwendet. Gegebenenfalls werden vor der Entsalzung die im Abwasser enthaltenen Metallverbindungen durch Neutralisation mit Alkali entfernt. Das nitrathaltige Konzentrat wird in einem Verdampfer weiter aufkonzentriert, worauf eine anorganische Säure zugesetzt wird. Die durch doppelte Umsetzung erzeugte Salpetersäure wird einer Lösungsmittelextraktion mit einem neutralen Phosphorsäureester unterzogen. Dann wird das Lösungsmittel mit Wasser versetzt, wobei in der wässrigen Phase reine Salpetersäure erhalten wird.

Der Erfindung liegt die Aufgabe zugrunde, ein Verfahren zur Aufbereitung von nitrathaltigen Abwässern bereitzustellen, die neben Nitraten noch Störsubstanzen enthalten, wobei das Verfahren aufgrund der Wiedergewinnung der Nitrate kostengünstiger ist als die bekannten Verfahren zur Entfernung von Nitraten aus Abwässern.

Gegenstand der Erfindung ist somit ein Verfahren zur Aufbereitung von alkali- oder erdalkalinitrathaltigen Abwässern nach Anspruch 1.

Unter Störsubstanzen versteht man einerseits solche Substanzen, die die semipermeablen Membranen in den Umkehrosmose- bzw. Elektrodialysezellen schädigen können. Dazu gehören Fest- und Schwebstoffe, die die Kanäle der semipermeablen Membranen verstopfen können. Zum anderen versteht man darunter Substanzen, die das Endprodukt verunreinigen können. Dazu zählen in erster Linie Carbonate sowie Ammonium- oder Schwermetallverbindungen.

Vorzugsweise wird das erfindungsgemäße Verfahren zur Gewinnung von Alkalinitraten, insbesondere Natriumnitrat, angewendet. Daneben können aber auch Kaliumnitrat oder Lithiumnitrat gewonnen werden, wobei letzteres bei der Aufbereitung von Lithiumbatterien in verunreinigter Form erhalten wird.

Als Nicht-Alkalimetallverbindungen werden nach dem erfindungsgemäßen Verfahren insbesondere Verbindungen entfernt, die keine Erdalkalimetallverbindungen sind, insbesondere Schwermetallverbindungen.

Die Vorreinigung kann in einer oder mehreren Stufen durchgeführt werden. Zunächst werden im Allgemeinen die unlöslichen Feststoffe oder Schwebstoffe entfernt. Dies erfolgt in Abhängigkeit von der Größe der zu entfernenden Teilchen durch Sedimentation, Filtration, Zentrifugieren, Zyklonabscheidung und Flockung. Es kann aber auch eine Kombination dieser Abscheidungsverfahren angewendet werden. Bei der Filtration unterscheidet man zwischen einer gewöhnlichen Filtration, und der Ultrafiltration bzw. Mikrofiltration durch feinporige Membranen. Die Flockung wird in erster Linie bei schlecht filtrierbaren Schwebstoffen angewendet. Die ausgefällten Flocken können dann abfiltriert werden.

Die Abtrennung der Nicht-Alkalimetallverbindungen, z.B. der Schwermetallverbindungen kann durch Ausfällen von unlöslichen Verbindungen, z.B. der Hydroxide, Oxidhydrate und Carbonate bzw. Bicarbonate erfolgen. Die ausgefällten Substanzen können dann wie die Feststoffe entfernt werden, d.h. durch Sedimentation, Filtration, Zentrifugieren, Zyklonabscheidung oder Flockung.

Falls noch Spuren an Schwermetallen vorhanden sind, wird die Lösung einer Nanofiltration oder einem Ionenaustausch unterzogen. Dazu können Ionenaustauscher in der Alkali- oder der H-Form verwendet werden.

Werden zum Ausfällen der Schwermetallverbindungen Alkalicarbonate bzw. -bicarbonate verwendet oder sind diese bereits im Abwasser enthalten, so muss das Carbonation entfernt werden, da es einen Störstoff darstellt. Zu diesem Zweck wird die Lösung erfindungsgemäß mit Salpetersäure leicht angesäuert (beispielsweise bis auf einen pH-Wert von 4 bis 5), wodurch Kohlendioxid aus der Lösung ausgetrieben wird. Die angesäuerte Lösung wird mit Natronlauge neutralisiert und über Ionenaustauscher in der H-Form geleitet und wiederum neutralisiert. Damit sind die restlichen Spuren von Schwermetallen entfernt. Die Lösung wird anschließend, falls notwendig auf unter 30°C abgekühlt, da sich damit für die nachfolgende Umkehrosmose- bzw. Dialysebehandlung ein günstigeres Gleichgewicht einstellt.

Das erfindungsgemäße Verfahren ermöglicht die Aufbereitung von Abwässern mit einem hohen Gehalt an Nitraten, z.B. von mehr als 200 mg Nitratstickstoff/Liter. Die Konzentration an Nitratstickstoff ist nach oben nicht begrenzt und hängt praktisch nur davon ab, welchen Druck die Membranzellen noch aushalten können bzw. welchen energetischen Aufwand für die Erzeugung des osmotischen Drucks man wirtschaftlich noch für vertretbar erachtet. Im Allgemeinen geht man von einem Abwasser mit einem Nitratstickstoff-Gehalt von etwa 200 mg/Liter bis 35 g/Liter, vorzugsweise von 200 mg/Liter bis 20 g/Liter aus.

Die Umkehrosmose bzw. die Elektrodialyse werden vorzugsweise mehrstufig durchgeführt, wobei die Konzentrat- und Permeat-Ströme im allgemeinen gegenläufig geführt werden, so dass einerseits möglichst salzfreie Permeate und andererseits möglichst hochkonzentrierte Konzentrate erhalten werden.

Die Umkehrosmose wird bei hohem Druck durchgeführt. Vorzugsweise wird die mindestens eine Umkehrosmosezelle bei einem Druck von mehr als 30 bar, bevorzugt mehr als 55 bar, insbesondere mehr als 80 bar betrieben. Die Druckbereiche sind an sich nur durch die Stabilität der Osmosezelle bzw. die Leistung der Pumpe beschränkt. Bevorzugt wird der Druck innerhalb eines Bereichs von 30 bis 250 bar, bevorzugt 55 bis 180 bar, insbesondere bevorzugt 80 bis 120 bar gewählt.

Bei mehrstufiger Prozessführung werden die Umkehrosmosezellen vorzugsweise bei unterschiedlichem Druck betrieben. Der Druck wird dabei der Konzentration der nitrathaltigen Abwässer angepasst.

Die hochkonzentrierten nitrathaltigen Konzentrate werden zur Gewinnung der festen Nitrate noch weiter eingedampft. Diese werden als Handelsprodukte vertrieben. Es ist aber auch möglich die hochkonzentrierten Nitratlösungen in den Handel zu bringen.

Das erfindungsgemäße Verfahren ist weit kostengünstiger als das Denitrifikationsverfahren. Es entfallen die Kosten für die Bakterienkulturen, die Reduktionsmittel (z.B. Methanol) und sonstige Chemikalien. Ein weiterer Kostenfaktor beim Denitrifikationsverfahren ist die Entsorgung der Bakterienmasse als Klärschlamm. Weiterhin wird die Reaktionslösung entsprechend der eingangs angegebenen Gleichung alkalisch, so dass die Hydroxylionen durch Säure neutralisiert werden müssen. Dies führt zu einer Erhöhung der Salzfracht. Weiterhin entsteht bei der Denitrifikation Distickstoffoxid (N₂O), das als Treibhausgas unerwünscht ist. Das erfindungsgemäße Verfahren hat keinen dieser Nachteile. Außerdem werden die Betriebskosten dadurch gesenkt, dass die erhaltenen Nitrate in reiner Form als verkaufsfähige Produkte geeignet sind.

Die Erfindung ist nachstehend anhand der beigefügten Schemaskizzen erläutert:

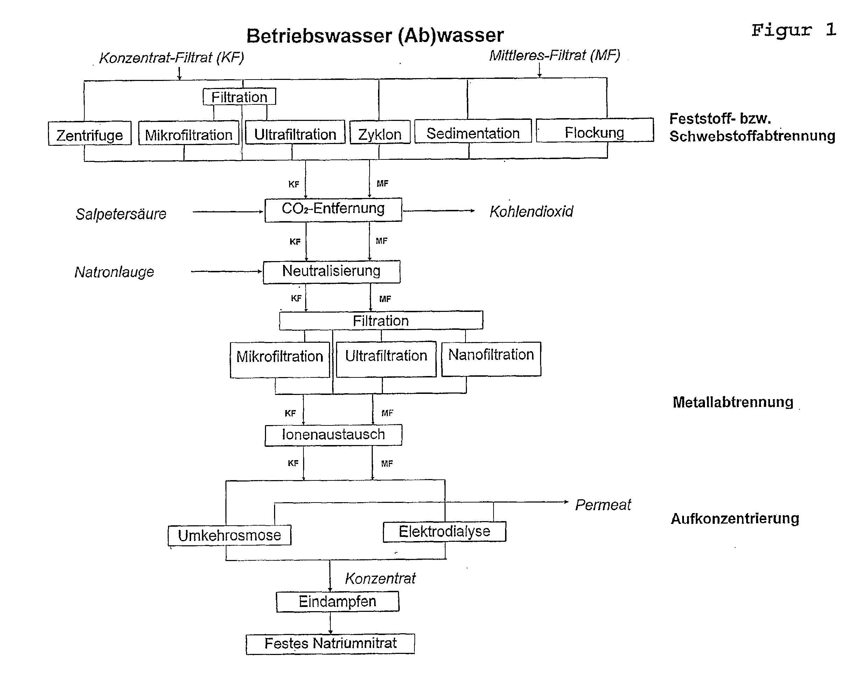

Fig. 1 zeigt das Gesamtverfahren mit Vorreinigung und Umkehrosmose bzw. Elektrodialyse.

Das Betriebswasser (Abwasser) wird zunächst zur Feststoff- bzw. Schwebstoffabtrennung in die Vorreinigungsstufe geleitet. Ein typisches Abwasser aus der ... Produktion hat beispielsweise folgende Zusammensetzung:
- NO₃⁻ 0,6 bis 80 g/Liter
- CO₃²- 0,0 bis 4 g/Liter
- Schwermetalle (als Summe) 0,0 bis 10 g/Liter
- Feststoffe/Schwebstoffe 0,0 bis 10 g/Liter

Als Schwermetalle sind prinzipiell alle Metalle außer den Alkali- und Erdalkalimetallen zu sehen, vorzugsweise Fe, Ni, Co, Cu, Al, Zn, Mn, Pb, Cr. Weiterhin können NH₄⁺ oder NO₂⁻ in Spuren vorhanden sein.

Zur Feststoffabtrennung bzw. Schwebstoffabtrennung kann eine Sedimentation, eine Zentrifugation bzw. eine Zyklonabscheidung, eine Filtration (Beutelfilter, Kerzenfilter, Bandfilter, Lamellenfilter, Automatikfilter, Filterpressen usw.) eine Flockung, eine Ultrafiltration oder eine Mikrofiltration oder eine Kombination dieser Verfahren eingesetzt werden. Die Mikrofiltration bzw. Ultrafiltration wird eingesetzt, wenn die übliche Filtration nicht ausreicht.

Die Auswahl des geeigneten Verfahrens bzw. der geeigneten Verfahrenskombination richtet sich im Wesentlichen nach der zu erwartenden Menge an unlöslichen Feststoffen.

An den ersten Reinigungsschritt der Abtrennung der Feststoffanteile wird mit Salpetersäure der pH-Wert soweit abgesenkt, dass CO₂ entweicht. Anschließend wird mit Alkali- oder Erdalkalilauge (hängt von dem zu gewinnenden Nitrat ab, z.B. bei Natriumnitrat setzt man Natronlauge ein) neutralisiert, ein weiteres Mal eventuell entstehender Feststoff abgetrennt, auf unter 30°C abgekühlt und noch in der Lösung vorhandene Schwermetalle über einen Ionenaustauscher entfernt.

Anschließend wird das vorgereinigte Abwasser einer Umkehrosmose bzw. einer Elektrodialyse unterzogen, wobei eine Aufkonzentrierung der Lösungen erfolgt. Das Konzentrat kann weiter zu festem Nitrat eingedampft oder als konzentrierte Nitratlösung verwendet werden. Das Permeat kann entweder in den Vorfluter geleitet oder als Betriebswasser verwendet werden.

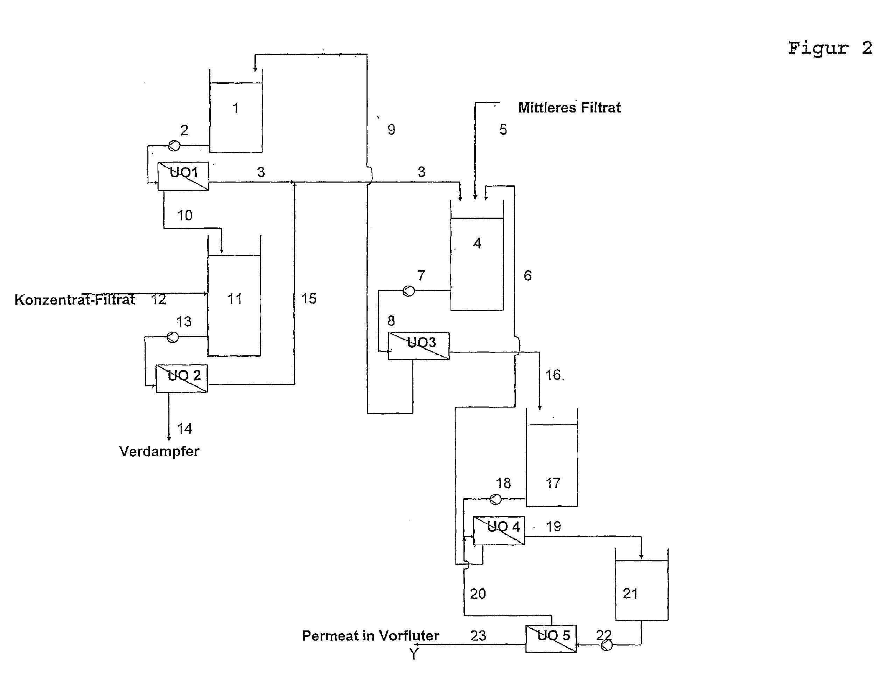

Fig. 2 zeigt eine Anlage mit fünf Umkehrosmosezellen (U01, U02, U03, U04 und U05). Aus dem Sammelbehälter 1 wird über die Pumpe 2, die einen Betriebsdruck von 60 bar erzeugt, eine NaNO₃-Lösung mit einer Konzentration von 42 g/Liter in die erste Umkehrosmosezelle UO1 gepumpt. Die NaNO₃-Lösung stellt eine rückgeführte Konzentratlösung aus der dritten Umkehrosmosezelle U03 dar (9). Aus UO1 wird über eine Leitung 3 ein Permeat mit einem NaNO₃-Gehalt von 11 g/Liter in einen Sammelbehälter 4 geleitet. In den Sammelbehälter 4 wird ferner über die Leitung 5 ein "mittleres Filtrat" (gereinigtes Abwasser aus der Vorreinigungsstufe mit mittlerer Konzentration an NaNO₃) mit einer NaNO₃-Konzentration von 8 g/Liter und über die Leitung 6 ein Konzentrat aus der vierten Umkehrosmosezelle U04 mit einer NaNO₃-Konzentration von 9 g/Liter geleitet. Das Lösungsgemisch aus dem Sammelbehälter 4 wird mit Hilfe der Pumpe 7 unter einem Druck von 55 bar über die Leitung 8 in die dritte Umkehrosmosezelle U03 gepumpt. Aus der UO3 wird über die Leitung 9 ein Konzentrat mit einem NaNO₃-Gehalt von 42 g/Liter in den Behälter 1 geleitet.

Aus UO1 gelangt ein Konzentrat mit einem NaNO₃-Gehalt von 92 g/Liter über die Leitung 10 in den Behälter 11.

In den Behälter 11 wird auch das "Konzentrat-Filtrat" (gereinigtes Abwasser aus der Vorreinigungsstufe mit hoher NaNO₃-Konzentration (NaNO₃-Gehalt 90 g/Liter) durch die Leitung 12 geleitet. Aus dem Behälter 11 wird das Lösungsgemisch mit Hilfe der Pumpe 13 in die zweite Umkehrosmosezelle U02 geleitet, die bei einem Druck von 80 bis 120 bar betrieben wird. Das Konzentrat mit einem NaNO₃-Gehalt von 160 g/ Liter wird über die Leitung 14 zu einem Verdampfer geleitet, in welchem festes Natriumnitrat gewonnen wird.

Das Permeat aus der Stufe U02 mit einer NaNO₃-Konzentration von 33 g/Liter wird über die Leitung 15 in die Leitung 3 und von da aus in den Sammelbehälter 4 geleitet.

Das Permeat aus der Umkehrosmosestufe UO3 (NaNO₃-Gehalt 3 g/Liter) wird über die Leitung 16 in den Sammelbehälter 17 und aus diesem über eine Pumpe 18 (30 bar) in die Umkehrosmosestufe U04 geleitet. Aus U04 gelangt ein Konzentrat mit einer NaNO₃-Konzentration von 9 g/Liter über die Leitung 6 in den Sammelbehälter 4. Das Permeat aus der Stufe U04 gelangt über die Leitung 19 in den Sammelbehälter 21 und von da aus über die Pumpe 22 (30 bar) in die Umkehrosmosestufe UO5, und wird dort in ein Konzentrat mit einem NaNO₃-Gehalt von 9 g/Liter (das über die Leitung 20 in die Umkehrosmosestufe U04 strömt), und in ein Permeat aufgeteilt. Das Permeat hat eine NaNO₃-Konzentration von 0,3 g/ Liter und kann über die Leitung 23 unbedenklich in den Vorfluter eingeleitet oder als Betriebswasser verwendet werden.

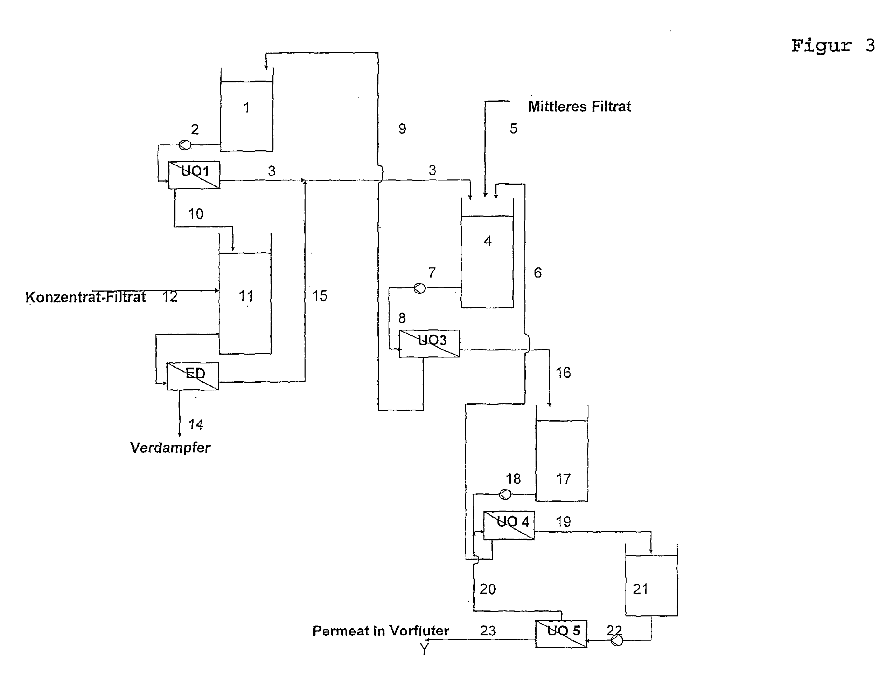

Eine Anlage zur Aufkonzentrierung des aus der Vorreinigungsstufe von Figur 1 kommenden gereinigten Abwassers durch Elektrodialyse ist in Fig. 3 dargestellt. Diese zeigt eine beispielhafte Ausführungsform, bei der die Hochdruck-Umkehrosmosezelle U02 durch eine Elektrodialysezelle ED ersetzt ist, in die das Konzentrat aus dem Sammelbehälter 11 drucklos eingeleitet wird, d.h. es fehlt die Pumpe 13 von Fig. 2.

Die übrigen Stufen bleiben als Umkehrosmosestufen erhalten. Die mit der Elektrodialysezelle erzielbare NaNO₃-Konzentration liegt im Bereicht von etwa 200 g/Liter d.h. im gleichen Bereich wie bei der Umkehrosmose.

## Patentansprüche

1. Verfahren zur Aufbereitung von alkali- und/oder erdalkalinitrathaltigen Abwässern, **dadurch gekennzeichnet, dass** man die Abwässer, die neben Nitraten noch Störsubstanzen enthalten, nach einer Vorreinigung unter Ansäuern mit Salpetersäure auf einen pH-Wert zwischen 4 und 5 zur Entfernung der Fest- oder Schwebstoffe und/oder der Nicht-Alkalimetallverbindungen und/oder Carbonationen durch mindestens eine Umkehrosmose- und/oder Elektrodialysezelle leitet, das Konzentrat gegebenenfalls weiter aufkonzentriert und die Nitrate in Form einer konzentrierten Lösung oder in Form der festen Salze gewinnt.

2. Verfahren nach Anspruch 1, **dadurch gekennzeichnet, dass** man Alkali- oder Erdalkalinitrate, vorzugsweise Natriumnitrat, gewinnt.

3. Verfahren nach Anspruch 1 oder 2, **dadurch gekennzeichnet, dass** die Nicht- Alkalimetallverbindungen Schwermetallverbindungen darstellen.

4. Verfahren nach einem der Ansprüche 1 bis 3, **dadurch gekennzeichnet, dass** man die Nicht-Alkalimetallverbindungen als unlösliche Verbindungen ausfällt oder die Nicht-Alkalimetalle durch Ionenaustausch und/oder Nanofiltration entfernt.

5. Verfahren nach einem der Ansprüche 1 bis 4, **dadurch gekennzeichnet, dass** man von einem Abwasser mit einem Nitrat-Stickstoff-Gehalt von mindestens 200 mg/Liter ausgeht.

6. Verfahren nach einem der Ansprüche 1 bis 5, **dadurch gekennzeichnet, dass** man von einem Abwasser mit einem Nitrat-Stickstoff-Gehalt von etwa 200 mg/Liter bis 30 g/Liter, vorzugsweise von etwa 200 mg/Liter bis 20 g/Liter ausgeht.

7. Verfahren nach einem der Ansprüche 1 bis 6, **dadurch gekennzeichnet, dass** man mehrstufig arbeitet, wobei die Konzentrat- und Permeat-Ströme im Allgemeinen gegenläufig geführt werden.

8. Verfahren nach einem der Ansprüche 1 bis 7, **dadurch gekennzeichnet, dass** die mindestens eine Umkehrosmosezelle bei einem Druck von mehr als 30 bar, bevorzugt mehr als 55 bar, insbesondere bevorzugt mehr als 80 bar betrieben wird.

9. Verfahren nach Anspruch 7, wobei bei mehrstufiger Prozessführung die Umkehrosmosezellen bei unterschiedlichen Drücken betrieben werden.

## Claims

1. A method for treating waste water containing alkali nitrates and/or alkaline-earth nitrates, **characterised in that** the waste water, which in addition to nitrates also contains contaminants, after preliminary purification by acidification with nitric acid to a pH value of between 4 and 5 so as to remove solid or suspended matter and/or non-alkali metal compounds and/or carbonate ions, is passed through at least one reverse osmosis and/or electrodialysis cell, the concentrate is optionally further concentrated and the nitrates are obtained in the form of a concentrated solution or in the form of solid salts.

2. A method according to Claim 1, **characterised in that** alkali nitrates and/or alkaline-earth nitrates are obtained, preferably sodium nitrate.

3. A method according to Claim 1 or 2, **characterised in that** the non-alkali metal compounds are heavy-metal compounds.

4. A method according to any one of Claims 1 to 3, **characterised in that** the non-alkali metal compounds are precipitated as insoluble compounds or the non-alkali metals are removed by ion exchange and/or nano filtration.

5. A method according to any one of Claims 1 to 4, **characterised in that** a starting waste water is used which has a nitrate-nitrogen content of at least 200 mg/litre.

6. A method according to any one of Claims 1 to 5, **characterised in that** a starting waste water is used which has a nitrate-nitrogen content of from approximately 200 mg/litre to 30 g/litre, preferably from approximately 200 mg/litre to 20 g/litre.

7. A method according to any one of Claims 1 to 6, **characterised in that** the method is performed as a multistage process, wherein the concentrate and permeate streams are generally directed to flow countercurrently.

8. A method according to any one of Claims 1 to 7, **characterised in that** the at least one reverse osmosis cell is operated at a pressure of more than 30 bar, preferably more than 55 bar, particularly preferably more than 80 bar.

9. A method according to Claim 7, wherein if the method is performed as a multistage process the reverse osmosis cells are operated at different pressures.

## Revendications

1. Procédé de traitement d'eaux usées contenant des nitrates alcalins ou alcalino-terreux, **caractérisé en ce que** l'on conduit les eaux usées contenant, outre des nitrates, des substances parasites, après une pré-épuration par acidification avec de l'acide nitrique à une valeur de pH comprise entre 4 et 5 afin d'éliminer les matières solides ou en suspension et/ou les composés de métaux non alcalins et/ou les ions carbonate à travers au moins une cellule d'osmose inverse et/ou une cellule d'électrodialyse, l'on concentre en outre le cas échéant le concentré et l'on obtient les nitrates sous forme d'une solution concentrée ou sous forme de sels solides.

2. Procédé selon la revendication 1, **caractérisé en ce que** l'on obtient des nitrates alcalins ou alcalino-terreux, de préférence du nitrate de sodium.

3. Procédé selon la revendication 1 ou 2,
**caractérisé en ce que** les composés de métaux non alcalins sont des composés de métaux lourds.

4. Procédé selon l'une quelconque des revendications 1 à 3, **caractérisé en ce que** l'on fait précipiter les composés de métaux non alcalins sous la forme de composés insolubles ou l'on élimine les métaux non alcalins par échange d'ions et/ou nanofiltration.

5. Procédé selon l'une quelconque des revendications 1 à 4, **caractérisé en ce que** l'on part d'eaux usées ayant une teneur en azote due aux nitrates d'au moins 200 mg/litre.

6. Procédé selon l'une quelconque des revendications 1 à 5, **caractérisé en ce que** l'on part d'eaux usées ayant une teneur en azote due aux nitrates d'environ 200 mg/litre à 30 g/litre, de préférence d'environ 200 mg/litre à 20 g/litre.

7. Procédé selon l'une quelconque des revendications 1 à 6, **caractérisé en ce que** l'on travaille avec plusieurs étages, moyennant quoi les courants de concentrat et de perméat circulent généralement à contre-courant.

8. Procédé selon l'une quelconque des revendications 1 à 7, **caractérisé en ce que** la au moins une cellule d'osmose inverse fonctionne à une pression supérieure à 30 bar, de préférence supérieure à 55 bar, de manière particulièrement préférée supérieure à 80 bar.

9. Procédé selon la revendication 7, dans lequel, dans les procédés à plusieurs étages, les cellules d'osmose inverse fonctionnent à différentes pressions.
